# EUROPEAN PATENT SPECIFICATION

(11) **EP 4 554 111 B1**
(45) Date of publication and mention of the grant of the patent: **24.06.2026**
(21) Application number: 23208768.4
(22) Date of filing: 09.11.2023
(51) Int. Cl.: H04B 7/185, H04W 72/0453, H04W 84/00

(54) **METHOD FOR OPERATING A USER EQUIPMENT WITH A RADIO ACCESS NETWORK OF A MOBILE COMMUNICATION NETWORK, USER EQUIPMENT, BASE STATION ENTITY, SYSTEM OR MOBILE COMMUNICATION NETWORK, PROGRAM AND COMPUTER-READABLE MEDIUM**
VERFAHREN ZUM BETREIBEN EINES BENUTZERGERÄTS MIT EINEM FUNKZUGANGSNETZ EINES MOBILFUNKNETZES, BENUTZERGERÄT, BASISSTATIONSEINHEIT, SYSTEM ODER MOBILKOMMUNIKATIONSNETZ, PROGRAMM UND COMPUTERLESBARES MEDIUM
PROCÉDÉ DE FONCTIONNEMENT D'UN ÉQUIPEMENT UTILISATEUR AVEC UN RÉSEAU D'ACCÈS RADIO D'UN RÉSEAU DE COMMUNICATION MOBILE

(43) Date of publication of application: 14.05.2025
(73) Proprietor: Deutsche Telekom AG, 53113 Bonn (DE)
(72) Inventor: Beyer, Jürgen, 57250 Netphen (DE); HOLIS, Jaroslav, 25210 Mnísek pod Brdy (CZ)
(74) Representative: Schwöbel, Thilo K.

(56) References cited:
- US-A1- 2022 029 695
- US-A1- 2022 148 434
- US-A1- 2023 239 036

## Description

### BACKGROUND

The present invention relates a method for operating a user equipment with a radio access network of a mobile communication network, the radio access network comprising at least one base station entity and the user equipment, being aboard of or corresponding to an aerial vehicle, is connected with, or served by, the at least one, or serving, base station entity for the transmission of data in downlink direction (from the serving base station entity towards the user equipment), and in uplink direction (from the user equipment towards the serving base station entity).

Furthermore, the present invention relates to a user equipment for being operated with a radio access network of a mobile communication network, the radio access network being configured to comprise at least one base station entity, wherein the user equipment is aboard of or corresponds to an aerial vehicle and is configured to be connected with, or served by, the at least one, or serving, base station entity in view of reception of data, in downlink direction, from the serving base station entity, and in view of transmission of data, in uplink direction, by the user equipment towards the serving base station entity.

Furthermore, the present invention relates to a base station entity for operating a user equipment with a radio access network of a mobile communication network, the radio access network comprising at least the base station entity and the user equipment, being aboard of or corresponding to an aerial vehicle, is connected with, or served by, this serving base station entity for the transmission of data in downlink direction from the serving base station entity towards the user equipment, and in uplink direction from the user equipment towards the serving base station entity.

Furthermore, the present invention relates to a system or to a telecommunications network for operating a user equipment with a radio access network of a mobile communication network, the radio access network comprising at least one base station entity and the user equipment, being aboard of or corresponding to an aerial vehicle, is connected with, or served by, the at least one, or serving, base station entity for the transmission of data in downlink direction from the serving base station entity towards the user equipment, and in uplink direction from the user equipment towards the serving base station entity.

Furthermore, the present invention relates to a program and to a computer-readable medium for operating a user equipment with a radio access network of a mobile communication network with at least one user equipment according to the inventive method.

The present invention relates to the area of telecommunications networks, especially wireless telecommunications networks or mobile communication networks. Such conventionally known telecommunications networks or mobile communication networks are known to be used for controlling aerial vehicles, e.g. commercial uncrewed aerial vehicles (UAVs, or also called drones). Such aerial vehicles are using mobile radio applications (provided by mobile communication networks) for mainly two purposes: firstly, for controlling the (uncrewed) aerial vehicle flight in case of beyond line-of-sight flights, and, secondly, for transferring data from sensors installed at the (uncrewed) aerial vehicle, e.g. cameras.

In the case of beyond line-of-sight flights, an aerial vehicle, or a UAV, receives the flight commands from and transmits flight related information to the UAV pilot via mobile radio, i.e. typically either (solely) by the mobile communication network, or, at least, involving the mobile communication network (in addition to communication means). In addition, the flight control authority might be permitted to take over the control in specific cases or situations which is also done via mobile radio, i.e. the mobile communication network.

Aerial vehicles or UAVs are typically flying at a height of more than 50m above the ground. A mobile station (or user equipment), being located at 50m height (above the ground) and transmitting data in the uplink (direction) to its serving base station entity usually also generates radio interference in the uplink (direction) of all other base station entities in an area of several kilometers in radius around the aerial vehicle or UAV (i.e. regarding respective physical resources of the air interface of such other base station entities).

In consequence, the uplink performance of terrestrial users (especially of such other base station entities) is degraded by the aerial vehicle or UAV transmitting, especially comparatively high bandwidth (sensor) data, in uplink direction.

Especially, in conventionally known mobile communication networks, the network does not differentiate between a user equipment (or mobile station) at an aerial vehicle or UAV and a user equipment (or mobile station) of terrestrial mobile radio users. Both types of user equipments can be served by any mobile radio carrier. Which radio carrier is to serve which user equipment (or mobile station) depends on many conditions and factors.

Thus, one aerial vehicle or UAV might be served by a specific radio carrier but another aerial vehicle or UAV nearby might be served by another radio carrier and a third aerial vehicle or UAV by still a further radio carrier and so on. With an increase in the usage of aerial vehicles or UAVs, many aerial vehicles or UAVs will fly in a region and they might be served from several mobile radio carriers - thus generating an increase of uplink radio interference in several radio carriers and/or in a number of radio cells or base station entities.

Document US 2023/239036 A1 discloses a method for operating a user equipment with a radio access network of a mobile communication network, the radio access network comprising at least one base station entity and the user equipment being aboard of or corresponding to an aerial vehicle, and being served by the base station entity for the transmission of data.

### SUMMARY

An object of the present invention is to provide an effective and simple approach for operating a user equipment with a radio access network of a mobile communication network, wherein the user equipment is aboard of or corresponding to an aerial vehicle or UAV and served by a base station entity of the radio access network for uplink and/or downlink data transmission, wherein radio interference caused by the user equipment aboard of or corresponding to the aerial vehicle or UAV (especially due to data transmission in uplink direction) is reduced as much as possible, also regarding base station entities or radio cells in the vicinity or nearby the base station entity serving the user equipment or aerial vehicle. A further object of the present invention is to provide a corresponding user equipment, a corresponding base station a corresponding program and computer-readable medium.

The present invention is defined by the appended claims.

### BRIEF DESCRIPTION OF THE DRAWINGS

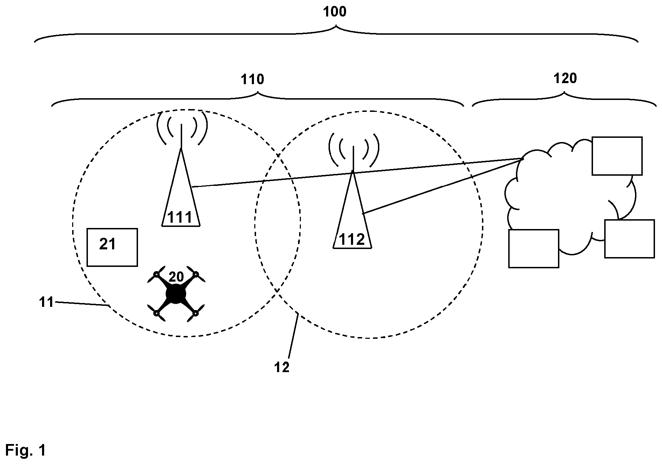

Figure 1 schematically illustrates a telecommunications network comprising an access network, a core network and a user equipment, wherein the (radio) access network comprises a number of base station entities providing radio coverage for specific geographical areas, respectively, wherein the user equipment - being aboard of or corresponding to an aerial vehicle - is connected with, or served by, at least one base station entity (serving base station entity) for the transmission of data in downlink and/or in uplink direction.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. Examples of such network functions or services include, e.g., an access and mobility management function, AMF, and/or a user plane function, UPF - especially in case of a 5G mobile communication network. The access network 110 or radio access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality. The mobile communication network 100 is typically connected to a plurality of user equipments (or, rather, the user equipments are connected to the telecommunications network 100).

In the situation exemplarily shown in Figure 1, a user equipment 20 and a further user equipment 21 are schematically shown, and both these user equipments 20, 21 are connected with, or served by, the (first) base station entity 111. As schematically and exemplarily shown in Figure 1, the user equipment 20 corresponds to the user equipment 20 being aboard of an aerial vehicle, or the user equipment 20 corresponds to an aerial vehicle, i.e. in which case the aerial vehicle might be considered to be the user equipment 20. In addition to the user equipment 20, the further user equipment 21 is schematically shown to correspond to a rather classical user equipment, e.g. a smart phone. Especially, according to the present invention, the aerial vehicle is an uncrewed aerial vehicle, or UAV, or a crewed aerial vehicle.

As has been said, the user equipment 20 (and as well the further user equipment 21) is connected with, or served by, - exemplarily - the base station entity 111 (but this is not to be interpreted as a limitation, as also the further (or second) base station entity 112, or any other base station entity of the radio access network (not represented in Figure 1), could serve the user equipments 20, 21 if located in their respective radio coverage areas) for the transmission of data in downlink direction (i.e. from the serving base station entity 111 towards the user equipment(s) 20, or user equipments 20, 21), and/or in uplink direction (i.e. from the user equipment(s) 20, 21 towards the serving base station entity 111); however, typically such transmission of data occur both in downlink direction and in uplink direction.

Of course, there are, typically, (much) more than just two user equipments 20, 21, and often also more than just one user equipment 20 that is located aboard of an aerial vehicle, however, for the sake of simplicity, only the user equipment 20 and the further user equipment 21 are shown in Figure 1.

The transmission of data, typically control data (on a control plane, CP) and/or user data (on a user plane, UP) - between the user equipments 20, 21 and the respective serving base station entity 111, or base station entities 111, 112 - in uplink and/or in downlink direction typically involves radiofrequency signals using a certain frequency, or a number of frequencies, or one or a plurality of frequency bands. Such frequencies or frequency bands are used, by different base station entities and the respective user equipments that are served by these base station entities in a manner such as to reduce interference effects as much as possible.

In case of ground-bound or terrestrial user equipments (i.e. user equipments that are mainly used on the ground or in an area of limited height above the ground, especially up to e.g. 10 meters height above the average surrounding building or environment (e.g. forests) height) - such as the further user equipment 21 - such interference effects, especially caused by radiofrequency signals transmitted by such user equipments, are able to be assumed to be locally rather confined, especially in the vicinity of the respective user equipment.

However, in case of user equipments aboard of aerial vehicles - such as user equipment 20 -, as such aerial vehicles are typically flying at heights of 50 meters above ground or even more than that, the interference effects that are potentially caused by radiofrequency signals transmitted by such user equipments might be non-negligible much farther away from the respective user equipment, often in areas (e.g. sector areas in case of an antenna directionality) at distances of up to several kilometers from the aerial vehicle or UAV and/or in areas of up to several kilometers in radius around the aerial vehicle or UAV. This at least potentially might lead - due to such possible interference effects - to impeding the respective physical resources of the air interface of other base station entities, i.e. base station entities besides the serving base station entity 111 of the respective user equipment 20, especially base station entities located nearby the serving base station entity 111. As a consequence, the uplink performance of user equipments served by these other base station entities (especially terrestrial user equipments of such other base station entities) might be degraded by the user equipment 20 that is aboard the aerial vehicle or UAV and is transmitting data in uplink direction; this is, of course, especially true in case that this data transmission in uplink direction involves the transmission of comparatively high bandwidth data (e.g. sensor data), thus requiring a larger share of air interface resources and, thus, potentially causing more interference.

In conventionally known mobile communication networks, such networks do not - or, at least, not always - differentiate between a user equipment (or mobile station) 20 aboard an aerial vehicle or UAV on the one hand, and a user equipment (or mobile station) 21 of terrestrial mobile radio users. This also means that out of a plurality of possible mobile radio frequency ranges or frequency bands that a base station entity might be able to assign (within its radio cell) to one or a plurality of different user equipments the criterion of whether a specific user equipment is aboard an aerial vehicle or not is - at least in general - not able to be taken into consideration (at least not regarding certain aerial vehicle-based user equipments. Hence, in such a situation or regarding such user equipments (for which it is not known, to the mobile communication network, whether such user equipments are located aboard an aerial vehicle or not) both types of user equipments (i.e. onboard an aerial vehicle or not) can be served by any mobile radio carrier, i.e. using any radio frequency ranges or frequency bands, and the choice of such used frequencies for specific user equipments might depend on many conditions and factors.

Hence, an increase of the use of aerial vehicle-based user equipments, combined with an indiscriminate assignment of frequency resources to be used - especially in the uplink direction - by such aerial vehicle-based user equipments tends to lead to an increase of uplink radio interference in several radio carrier frequencies or carrier frequency bands and/or in a number of radio cells, i.e. involving several base station entities.

According to the method, user equipment, base station entity and system or mobile communication network according to the present invention, it is proposed to reduce such interference effects by means of concentrating the assignment of carrier frequencies or frequency bands to be used by aerial vehicle-based user equipments to either a single mobile radio carrier, i.e. a single carrier frequency, or, at least, to a comparatively small number of such mobile radio carrier frequencies or carrier frequency bands.

Especially according to the present invention, all mobile stations or user equipments aboard of aerial vehicles or at UAVs (such as user equipment 20) are served by just one mobile radio carrier, i.e. frequency range or frequency band, and, thus, the negative impact of the uplink interference due to such mobile stations or user equipments being located at aerial vehicles or UAVs exists only in this one radio carrier instead of in several carriers.

In the context of the present invention such a single mobile radio carrier, i.e. a frequency range or frequency band, that is used for aerial vehicle-based user equipments or mobile stations is also called a specific mobile radio carrier or frequency range. Alternatively, in case that a plurality of such mobile radio carriers, i.e. a plurality of frequency ranges or frequency bands, are used for aerial vehicle-based user equipments or aerial vehicle-based mobile stations, each one of such mobile radio carriers also corresponds to a specific mobile radio carrier or frequency range.

Especially according to the present invention, mobile stations or user equipments of terrestrial users (such as the further user equipment 21) are shifted to other mobile radio carriers (that are not used by aerial vehicle-based user equipments or mobile stations) when the radio network detects a comparatively high uplink interference due to such aerial vehicle-based mobile stations or user equipments. As a result - and by means of using the other mobile radio carriers, i.e. not the specific mobile radio carrier or specific frequency range (or one of the specific mobile radio carriers or specific frequency ranges) -, the uplink performance of terrestrial mobile stations or user equipments is either not degraded at all, or, at least, less severely degraded.

Hence, it is preferred that regarding a terrestrial user equipment (i.e. such as the further user equipment 21), the serving base station entity 111 and/or the radio access network 110 uses a mobile radio carrier or frequency range that differs from the specific mobile radio carrier or frequency range that is used with regard to or by the user equipment 20.

Hence, according to the present invention, it is proposed that, in order to assure that - out of a plurality of possible mobile radio frequency ranges or frequency bands - such a specific mobile radio carrier or frequency range is used - with regard to or by the aerial vehicle-based user equipment 20 (being aboard of or corresponding to the aerial vehicle) - the method comprises the steps of:
-- detecting, by the serving base station entity 111 or by the radio access network 110, that the user equipment 20 is aboard of or corresponds to the aerial vehicle, and
-- using the specific mobile radio carrier or frequency range with regard to or by the user equipment 20.

This, of course, might also involve, if applicable, changing the previously used mobile radio carrier or frequency range (especially in case such previously used mobile radio carrier or frequency range belonged to the other mobile radio carriers (that are not used by aerial vehicle-based user equipments or mobile stations)). Hence, it is preferred, according to the present invention, that the mobile radio carrier or frequency range (previously) used with regard to or by the user equipment 20 is changed after the first step such that the specific mobile radio carrier or frequency range is used.

Especially, the specific mobile radio carrier or frequency range is used by the user equipment 20 and especially for transmitting data in uplink direction towards the serving base station entity 111, and especially using carrier aggregation, especially uplink carrier aggregation involving the mobile radio carrier or frequency range (being a specific mobile radio carrier or frequency range) as well as a further mobile radio carrier and/or a further frequency range (also being a specific mobile radio carrier or frequency range) - i.e. both the mobile radio carrier or frequency range and the further mobile radio carrier and/or further frequency range are part of the plurality of specific mobile radio carriers and/or frequency ranges.

According to the present invention, the detection, by the serving base station entity 111 or by the radio access network 110, that the user equipment 20 is aboard of or corresponds to the aerial vehicle relies on receiving or detecting at least one out of the following:
-- the number of radio cells reported, by the user equipment 20, to the serving base station entity 111,
-- the number of radio cells or base station entities that receive mobile radio signal power from the user equipment 20,
-- whether there is line-of-sight or non-line-of-sight transmission or propagation of radio signals between the user equipment 20 and the serving base station entity 111, especially inferred by means of measuring the received signal strength and/or the presence of strong multi-path propagation components,
-- the doppler shift of the carrier frequency,
-- the angle of signal arrival, especially in vertical plane, and
-- the distance between the user equipment 20 and the serving base station entity 111
-- an indication, transmitted by the user equipment 20 to the serving base station entity 111 or to the radio access network 110, that the user equipment 20 is aboard of or corresponds to an aerial vehicle.

Hence, according to at least one alternative embodiment of the present invention, an indication or a rather explicit indication - conveying the information that the respective user equipment is aerial vehicle-based - is transmitted by the user equipment 20 to the serving base station entity 111 or to the radio access network 110. Such an indication - being transmitted by the aerial vehicle-based user equipment 20 to the serving base station entity 111 (either directed to the serving base station entity 111 itself, i.e. using, e.g., access stratum communication, or directed to another component, e.g. a network function or service, of the mobile communication network 100, i.e. using, e.g., non-access stratum communication) - might especially be transmitted, according to the present invention, by means of, or involving, user plane communication and/or control plane communication.

According to further alternative embodiments of the present invention, a rather indirect detection - and, especially, without the need that the aerial vehicle-based user equipment 20 actually transmits any such (explicit) indication - might be applied to establish that the user equipment 20 is actually aerial vehicle-based (or, at least, assumed (by the base station entity 111 or the mobile communication network 100) to be aerial vehicle-based. This involves the base station entity 111, or the mobile communication network 100, to differentiate between aerial vehicle-based user equipments 20 or mobile stations and those user equipments 21 from terrestrial users. For that purpose, the present invention especially provides a plurality of methods, or indicators, that might be used in an isolated manner but might preferably be combined as using only a single one such method or indicator might not be sufficient.
-- According to a first method or indicator, the number (this number is hereinafter also called first indicator number) of mobile radio cells that are detected by a specific user equipment (for which the detection - by the serving base station entity 111 or by the radio access network 110 - shall be conducted whether the specific user equipment is aboard of or corresponds to the aerial vehicle, or not) is taken as a criterion: Each mobile station measures the received power from neighboring radio cells and reports these radio cells to the serving cell (i.e. to the serving base station entity 111) so that the mobile radio network (i.e. the serving base station entity 111 and/or the mobile communication network 100) knows the number of neighbor radio cells per mobile station or user equipment; for a mobile station at 50m height, the number of neighbour cells can be much higher than for a mobile station on ground level; this is able to be used to identify (or as an indicator of) an aerial vehicle-based user equipment or mobile station. However, in dense urban environments, even terrestrial mobile stations might have quite a considerable number of neighbor radio cells (This first method or indicator somehow has the drawback that there is, typically, an upper limit applied in the number of neighbor radio cells that a user equipment or mobile station (i.e. any user equipment or mobile station) reports or is able to report; hence, in any case or situation where this upper limit is reached, merely from the reported number of radio cells, especially neighboring radio cells, that are detected by the specific user equipment, no further differentiation is able to be derived as to whether it is aerial vehicle-based or not); hence, in such situations, considering one or a plurality of further methods or indicators, e.g. a second method or indicator, might be preferable.
-- According to such a second method or indicator, the number (this number is hereinafter also called second indicator number) of radio cells (i.e. base station entities) receiving mobile radio signal power from a specific user equipment (for which the detection - by the serving base station entity 111 or by the radio access network 110 - shall be conducted whether the specific user equipment is aboard of or corresponds to the aerial vehicle, or not) is taken as a criterion: This method or indicator is somehow similar to the first method or indicator (as it is also a number (of "radiofrequency contacts", i.e. the number of base station entities that are able to measure and detect radiofrequency signals transmitted by a considered user equipment or mobile station) that is used to differentiate as to whether the considered user equipment is aerial vehicle-based or not). Especially, it is advantageously possible (and preferred), according to the present invention, that in case that the mobile communication network 100 assumes, from the first indicator number that a specific user equipment or mobile station is aerial vehicle-based (i.e. aboard of, e.g. a UAV), it is advantageously possible (for the mobile communication network 100) to check by means of using the second indicator number whether the radiofrequency signal(s) from this user equipment or mobile station is received by many other base station entities; however, according to a further preferred embodiment of the present invention, the second indicator number might also be used without the first indicator number; however, the combination of both is also possible and preferred to be used according to the present invention.
-- According to a third method or indicator, it is detected, and taken as a criterion, whether there is likely a line-of-sight connection between a specific user equipment (for which the detection - by the serving base station entity 111 or by the radio access network 110 - shall be conducted whether the specific user equipment is aboard of or corresponds to the aerial vehicle, or not) and the (or its) serving base station entity: Since the aerial vehicle or UAV is typically flying more than 50m above the ground, it has very likely line-of-sight (LOS connection) to the serving base station entity 111; this is, typically, not the case for terrestrial user equipments or mobile stations as these mainly have non line-of-sight (NLOS connection) to the serving base station entity 111, i.e. a user equipment or mobile station having LOS has a higher likelihood of being an aerial vehicle-based user equipment, i.e. it might be a UAV. One simple measure to check if a user equipment or mobile station has line-of-sight LOS connection to the serving base station entity 111 is the received signal strength, since for LOS the signal power received at the base station entity is much higher than in the case of NLOS. In addition, other properties of the mobile radio channel can be taken into account; in general for NLOS the radio channel consists of many multi-path components whereas for LOS one dominating propagation path exists. Both, received power and multi-path propagation properties can be used to identify whether a considered user equipment or mobile station has LOS or NLOS to the serving base station entity.
-- According to a fourth method or indicator, the Doppler shift of the carrier frequency is detected regarding a specific user equipment (for which the detection - by the serving base station entity 111 or by the radio access network 110 - shall be conducted whether the specific user equipment is aboard of or corresponds to the aerial vehicle, or not) and taken as a criterion: At least many aerial vehicles or UAVs typically have a higher velocity (or velocity component in the direction towards the serving base station entity) than other (i.e. terrestrial) user equipments or mobile stations in the radio cell served by the considered base station entity. I.e. radiofrequency signals transmitted from a moving user equipment or mobile station have a slightly other carrier frequency than those transmitted from a stationary user equipment or mobile station. The higher such a (relative) velocity (or velocity component), the higher the associated frequency shift. This frequency shift (Doppler shift) is able to be estimated by the serving base station entity, and, therefore, it is possible to identify a fast-moving user equipment or mobile station. Since most user equipments or mobile stations in the serving radio cell will not move with high (relative) velocity (or velocity component), the Doppler shift is able to serve as one criterion to identify aerial vehicle-based user equipments or mobile stations, or, at least, user equipments or mobile stations having a higher likelihood of being aerial vehicle-based user equipments.
-- According to a fifth method or indicator, the angle of signal arrival regarding a specific user equipment (for which the detection - by the serving base station entity 111 or by the radio access network 110 - shall be conducted whether the specific user equipment is aboard of or corresponds to the aerial vehicle, or not) is taken as a criterion: Active antennas are able to measure the angle of signal arrival in the horizontal and vertical plane. The signal from an aerial vehicle-based user equipment or mobile station, flying at a certain altitude, is received with a different angle in vertical plane compared to terrestrial user equipments or mobile stations distributed in buildings and/or on the ground.
-- According to a sixth method or indicator, the distance between a specific user equipment (for which the detection - by the serving base station entity 111 or by the radio access network 110 - shall be conducted whether the specific user equipment is aboard of or corresponds to the aerial vehicle, or not) and the serving base station entity 111 is taken as a criterion: Terrestrial user equipments or mobile stations are mainly connected to the nearest base station entity 111. However, this is not true for aerial vehicle-based user equipments or mobile stations. Since the antennas of base station entities are generally directed to (towards) the ground, a considered aerial vehicle-based user equipment or mobile station might be served by ground reflections, and, hence, be located comparatively far away (from the considered base station entity).

According to the present invention, especially a combination of the above-mentioned methods or indicators are preferably used in order to detect whether a considered user equipment is aboard of or corresponds to the aerial vehicle (or not): In this respect, an example is provide why such a combination might be required to identify user equipments or mobile stations at UAVs, i.e. aboard aerial vehicles: A fast moving user equipment with line-of-sight LOS (connection) to the serving base station entity can also be a user equipment or a mobile station in a car on a motorway; however, such a user equipment or mobile station does typically not detect as many neighbor radio cells as an aerial vehicle-based user equipment or mobile station; hence, the third (and/or fourth) method or indicator (or criterion) - taken alone - would probably result in an erroneous identification (or detection) of the considered user equipment or mobile station being aboard an aerial vehicle or UAV, but taking additionally into account the first (and/or second) method or indicator (or criterion), this probably leads to a correct identification with a quite high probability.

Furthermore, the measures mentioned above (i.e. the first to sixth method or indicator, or criterion) have to be regarded together with corresponding values of all user equipments or mobile stations in a considered radio cell (or a plurality of considered radio cells). For example, a moving statistic of the received power from all user equipments or mobile stations per radio cell can be used for power based identification whether a line-of-sight situation or a non-line-of-sight situation applies; if all user equipments or mobile stations have a quite high RSRP, this measure, or criterion, is probably not very helpful or - vice versa - in case that one user equipment or mobile station has a higher RSRP than the other user equipments or mobile stations, it has very likely line-of-sight contact to the serving base station entity 111. Similar plausibility tests are able to be performed for the other methods or indicators (or criteria) as well.

## Claims

1. Method for operating a user equipment (20) with a radio access network (110) of a mobile communication network (100), the radio access network (110) comprising at least one base station entity (111) and the user equipment (20), being aboard of or corresponding to an aerial vehicle, is connected with, or served by, the at least one base station entity (111) for the transmission of data
-- in downlink direction from the serving base station entity (111) towards the user equipment (20), and
-- in uplink direction from the user equipment (20) towards the serving base station entity (111),
wherein in order to assure that - out of a plurality of possible mobile radio frequency ranges or frequency bands - a specific mobile radio carrier or frequency range is used -by the user equipment (20) and due to the user equipment (20) being aboard of or corresponding to the aerial vehicle - the method comprises the following steps:
-- in a first step, a detection, by the serving base station entity (111) or by the radio access network (110), occurs that the user equipment (20) is aboard of or corresponds to the aerial vehicle, and
-- in a second step, the specific mobile radio carrier or frequency range is used by the user equipment (20), wherein the mobile radio carrier or frequency range used by the user equipment (20) is changed after the first step such that the specific mobile radio carrier or frequency range is used,
**characterized in that** the detection, by the serving base station entity (111) or by the radio access network (110), that the user equipment (20) is aboard of or corresponds to the aerial vehicle relies on receiving or detecting at least one out of the following:
-- the number of radio cells reported, by the user equipment (20), to the serving base station entity (111),
-- the number of radio cells or base station entities that receive mobile radio signal power from the user equipment (20),
-- whether there is line-of-sight or non-line-of-sight transmission or propagation of radio signals between the user equipment (20) and the serving base station entity (111), especially inferred by means of measuring the received signal strength and/or the presence of strong multi-path propagation components,
-- the doppler shift of the carrier frequency,
-- the angle of signal arrival, especially in vertical plane, and
-- the distance between the user equipment (20) and the serving base station entity (111).

2. Method according to claim 1, wherein the specific mobile radio carrier or frequency range is used by the user equipment (20) and especially for transmitting data in uplink direction towards the serving base station entity (111), and especially using carrier aggregation, especially uplink carrier aggregation involving the specific mobile radio carrier or frequency range as well as a further specific mobile radio carrier and/or a further frequency range.

3. Method according to one of the preceding claims, wherein the aerial vehicle is an uncrewed aerial vehicle or a crewed aerial vehicle.

4. Method according to one of the preceding claims, wherein regarding a terrestrial user equipment, the serving base station entity (111) and/or the radio access network (110) uses a mobile radio carrier or frequency range that differs from the specific mobile radio carrier or frequency range that is used by the user equipment (20).

5. Base station entity (111) for operating a user equipment (20) with a radio access network (110) of a mobile communication network (100), the radio access network (110) comprising at least the base station entity (111) and the user equipment (20), being aboard of or corresponding to an aerial vehicle, is connected with the base station entity (111) for the transmission of data
-- in downlink direction from the serving base station entity (111) towards the user equipment (20), and
-- in uplink direction from the user equipment (20) towards the serving base station entity (111),
wherein in order to assure that a specific mobile radio carrier or frequency range is able to be used - by the user equipment (20) and due to the user equipment (20) being aboard of or corresponding to the aerial vehicle - the base station entity (111) is configured such that:
-- a detection, by the serving base station entity (111) or by the radio access network (110), occurs that the user equipment (20) is aboard of or corresponds to the aerial vehicle, and
-- the specific mobile radio carrier or frequency range is used by the user equipment (20), wherein the mobile radio carrier or frequency range used by the user equipment (20) is changed after the first step such that the specific mobile radio carrier or frequency range is used
**characterized in that** the detection, by the serving base station entity (111) or by the radio access network (110), that the user equipment (20) is aboard of or corresponds to the aerial vehicle relies on receiving or detecting at least one out of the following:
-- the number of radio cells reported, by the user equipment (20), to the serving base station entity (111),
-- the number of radio cells or base station entities that receive mobile radio signal power from the user equipment (20),
-- whether there is line-of-sight or non-line-of-sight transmission or propagation of radio signals between the user equipment (20) and the serving base station entity (111), especially inferred by means of measuring the received signal strength and/or the presence of strong multi-path propagation components,
-- the doppler shift of the carrier frequency,
-- the angle of signal arrival, especially in vertical plane, and
-- the distance between the user equipment (20) and the serving base station entity (111).

6. System or mobile communication network (100) comprising a base station entity (111) according to claim 5.

7. Program comprising a computer readable program code which, when executed on a computer or on a user equipment (20) or on a base station entity (111) or on a network node of a mobile communication network (100), or in part on the user equipment (20) and/or in part on the base station entity (111) and/or in part on the network node of the mobile communication network (100), causes the computer or the user equipment (20) or the base station entity (111) or the network node of the mobile communication network (100), to perform a method according one of claims 1 to 4.

8. Computer-readable medium comprising instructions which, when executed on a computer or on a user equipment (20) or on a base station entity (111) or on a network node of a mobile communication network (100), or in part on the user equipment (20) and/or in part on the base station entity (111) and/or in part on the network node of the mobile communication network (100), causes the computer or the user equipment (20) or the base station entity (111) or the network node of the mobile communication network (100), to perform a method according one of claims 1 to 4.

## Patentansprüche

1. Verfahren zum Betrieb eines Nutzergeräts (20) mit einem Funkzugangsnetz (110) eines Mobilfunknetzes (100), wobei das Funkzugangsnetz (110) mindestens eine Basisstationseinheit (111) umfasst und das Nutzergerät (20), das sich an Bord eines Luftfahrzeugs befindet oder einem Luftfahrzeug entspricht, mit der mindestens einen Basisstationseinheit (111) verbunden ist oder von dieser versorgt wird, zur Übertragung von Daten
- in Abwärtsstreckenrichtung von der versorgenden Basisstationseinheit (111) zum Nutzergerät (20) hin, und
- in Aufwärtsstreckenrichtung vom Nutzergerät (20) zur versorgenden Basisstationseinheit (111) hin,
wobei das Verfahren, um sicherzustellen, dass - aus einer Vielzahl möglicher mobiler Funk-Frequenzbereiche oder Frequenzbänder - ein bestimmter Mobilfunkträger oder Frequenzbereich vom Nutzergerät (20) verwendet wird - und zwar aufgrund des Umstands, dass sich das Nutzergerät (20) an Bord des Luftfahrzeugs befindet oder einem Luftfahrzeug entspricht -, die folgenden Schritte umfasst:
- in einem ersten Schritt erfolgt eine Erkennung durch die versorgende Basisstationseinheit (111) oder durch das Funkzugangsnetz (110), dass sich das Nutzergerät (20) an Bord des Luftfahrzeugs befindet oder einem Luftfahrzeug entspricht, und
- in einem zweiten Schritt wird der bestimmte Mobilfunkträger oder Frequenzbereich vom Nutzergerät (20) verwendet, wobei der vom Nutzergerät (20) verwendete Mobilfunkträger oder Frequenzbereich nach dem ersten Schritt so geändert wird, dass der bestimmte Mobilfunkträger oder Frequenzbereich verwendet wird,
**dadurch gekennzeichnet, dass** die Erkennung durch die versorgende Basisstationseinheit (111) oder durch das Funkzugangsnetz (110), dass sich das Nutzergerät (20) an Bord des Luftfahrzeugs befindet oder einem Luftfahrzeug entspricht, auf dem Empfangen oder Erkennen von mindestens einem der folgenden Merkmale beruht:
- die Anzahl der Funkzellen, die vom Nutzergerät (20) gegenüber der versorgenden Basisstationseinheit (111) gemeldet werden,
- die Anzahl der Funkzellen oder Basisstationseinheiten, die Mobilfunksignalleistung vom Nutzergerät (20) empfangen,
- ob zwischen dem Nutzergerät (20) und der versorgenden Basisstationseinheit (111) eine Sichtverbindungsübertragung oder eine Nicht-Sichtverbindungsübertragung bzw. -ausbreitung von Funksignalen vorliegt, insbesondere abgeleitet durch Messung der Empfangssignalstärke und/oder durch das Vorhandensein starker Mehrwegausbreitungskomponenten,
- die Dopplerverschiebung der Trägerfrequenz,
- der Signaleingangswinkel, insbesondere in der Vertikalebene, sowie
- die Entfernung zwischen dem Nutzergerät (20) und der versorgenden Basisstationseinheit (111).

2. Verfahren nach Anspruch 1, wobei der bestimmte Mobilfunkträger oder Frequenzbereich vom Nutzergerät (20) verwendet wird, insbesondere zur Übertragung von Daten in Aufwärtsstreckenrichtung zur versorgenden Basisstationseinheit (111) hin, und insbesondere unter Verwendung von Trägeraggregation, insbesondere Aufwärtsstrecken-Trägeraggregation, die den bestimmten Mobilfunkträger oder Frequenzbereich sowie einen weiteren bestimmten Mobilfunkträger und/oder einen weiteren Frequenzbereich einschließt.

3. Verfahren nach einem der vorhergehenden Ansprüche, wobei das Luftfahrzeug ein unbemanntes Luftfahrzeug oder ein bemanntes Luftfahrzeug ist.

4. Verfahren nach einem der vorhergehenden Ansprüche, wobei für ein terrestrisches Nutzergerät die versorgende Basisstationseinheit (111) und/oder das Funkzugangsnetz (110) einen Mobilfunkträger oder Frequenzbereich verwendet, der sich von dem bestimmten Mobilfunkträger oder Frequenzbereich unterscheidet, der vom Nutzergerät (20) verwendet wird.

5. Basisstationseinheit (111) zum Betrieb eines Nutzergeräts (20) mit einem Funkzugangsnetz (110) eines Mobilfunknetzes (100), wobei das Funkzugangsnetz (110) mindestens die Basisstationseinheit (111) umfasst und das Nutzergerät (20), das sich an Bord eines Luftfahrzeugs befindet oder einem Luftfahrzeug entspricht, mit der Basisstationseinheit (111) verbunden ist, zur Übertragung von Daten
- in Abwärtsstreckenrichtung von der versorgenden Basisstationseinheit (111) zum Nutzergerät (20) hin, und
- in Aufwärtsstreckenrichtung vom Nutzergerät (20) zur versorgenden Basisstationseinheit (111) hin,
wobei die Basisstationseinheit (111), um sicherzustellen, dass ein bestimmter Mobilfunkträger oder Frequenzbereich vom Nutzergerät (20) verwendet werden kann - und zwar aufgrund des Umstands, dass sich das Nutzergerät (20) an Bord des Luftfahrzeugs befindet oder einem Luftfahrzeug entspricht -, so konfiguriert ist, dass:
- eine Erkennung durch die versorgende Basisstationseinheit (111) oder durch das Funkzugangsnetz (110) erfolgt, dass sich das Nutzergerät (20) an Bord des Luftfahrzeugs befindet oder einem Luftfahrzeug entspricht, und
- der bestimmte Mobilfunkträger oder Frequenzbereich vom Nutzergerät (20) verwendet wird, wobei der vom Nutzergerät (20) verwendete Mobilfunkträger oder Frequenzbereich nach dem ersten Schritt so geändert wird, dass der bestimmte Mobilfunkträger oder Frequenzbereich verwendet wird,
**dadurch gekennzeichnet, dass** die Erkennung durch die versorgende Basisstationseinheit (111) oder durch das Funkzugangsnetz (110), dass sich das Nutzergerät (20) an Bord des Luftfahrzeugs befindet oder einem Luftfahrzeug entspricht, auf dem Empfangen oder Erkennen von mindestens einem der folgenden Merkmale beruht:
- die Anzahl der Funkzellen, die vom Nutzergerät (20) gegenüber der versorgenden Basisstationseinheit (111) gemeldet werden,
- die Anzahl der Funkzellen oder Basisstationseinheiten, die Mobilfunksignalleistung vom Nutzergerät (20) empfangen,
- ob zwischen dem Nutzergerät (20) und der versorgenden Basisstationseinheit (111) eine Sichtverbindungsübertragung oder eine Nicht-Sichtverbindungsübertragung bzw. -ausbreitung von Funksignalen vorliegt, insbesondere abgeleitet durch Messung der Empfangssignalstärke und/oder durch das Vorhandensein starker Mehrwegausbreitungskomponenten,
- die Dopplerverschiebung der Trägerfrequenz,
- der Signaleingangswinkel, insbesondere in der Vertikalebene, sowie
- die Entfernung zwischen dem Nutzergerät (20) und der versorgenden Basisstationseinheit (111).

6. System oder Mobilfunknetz (100), das eine Basisstationseinheit (111) nach Anspruch 5 umfasst.

7. Programm, das einen computerlesbaren Programmcode umfasst, der, wenn er auf einem Computer oder auf einem Nutzergerät (20) oder auf einer Basisstationseinheit (111) oder auf einem Netzwerkknoten eines Mobilfunknetzes (100) ausgeführt wird, oder teilweise auf dem Nutzergerät (20) und/oder teilweise auf der Basisstationseinheit (111) und/oder teilweise auf dem Netzwerkknoten des Mobilfunknetzes (100), den Computer oder das Nutzergerät (20) oder die Basisstationseinheit (111) oder den Netzwerkknoten des Mobilfunknetzes (100) veranlasst, ein Verfahren nach einem der Ansprüche 1 bis 4 durchzuführen.

8. Computerlesbares Medium, das Anweisungen umfasst, die, wenn sie auf einem Computer oder auf einem Nutzergerät (20) oder auf einer Basisstationseinheit (111) oder auf einem Netzwerkknoten eines Mobilfunknetzes (100) ausgeführt werden, oder teilweise auf dem Nutzergerät (20) und/oder teilweise auf der Basisstationseinheit (111) und/oder teilweise auf dem Netzwerkknoten des Mobilfunknetzes (100), den Computer oder das Nutzergerät (20) oder die Basisstationseinheit (111) oder den Netzwerkknoten des Mobilfunknetzes (100) veranlassen, ein Verfahren nach einem der Ansprüche 1 bis 4 durchzuführen.

## Revendications

1. Procédé de fonctionnement d'un équipement utilisateur (20) avec un réseau d'accès radio (110) d'un réseau de communication mobile (100), le réseau d'accès radio (110) comprenant au moins une entité de station de base (111) et l'équipement utilisateur (20), se trouvant à bord d'un véhicule aérien ou correspondant à un véhicule aérien, est connecté à, ou desservi par, ladite au moins une entité de station de base (111) pour la transmission de données
- en liaison descendante depuis l'entité de station de base (111) desservante vers l'équipement utilisateur (20), et
- en liaison montante depuis l'équipement utilisateur (20) vers l'entité de station de base (111) desservante,
le procédé, afin de garantir que - parmi une pluralité de plages de fréquences ou de bandes de fréquences radio mobiles possibles - une porteuse de radiocommunication mobile ou une plage de fréquences spécifique soit utilisée par l'équipement utilisateur (20), du fait que l'équipement utilisateur (20) se trouve à bord du véhicule aérien ou lui correspond, comprenant les étapes suivantes :
- dans une première étape, une détection par l'entité de station de base (111) desservante ou par le réseau d'accès radio (110) s'opère, attestant que l'équipement utilisateur (20) se trouve à bord du véhicule aérien ou lui correspond, et
- dans une deuxième étape, la porteuse de radiocommunication mobile ou la plage de fréquences spécifique est utilisée par l'équipement utilisateur (20), la porteuse de radiocommunication mobile ou la plage de fréquences utilisée par l'équipement utilisateur (20) étant modifiée après la première étape de telle sorte que la porteuse de radiocommunication mobile ou la plage de fréquences spécifique soit utilisée,
**caractérisé en ce que** la détection par l'entité de station de base (111) desservante ou par le réseau d'accès radio (110), attestant que l'équipement utilisateur (20) se trouve à bord du véhicule aérien ou lui correspond, repose sur la réception ou la détection d'au moins l'un des éléments suivants :
- le nombre de cellules radio rapporté par l'équipement utilisateur (20) à l'entité de station de base (111) desservante,
- le nombre de cellules radio ou d'entités de station de base qui reçoivent la puissance du signal de radiocommunication mobile émis par l'équipement utilisateur (20),
- la présence ou non d'une transmission en visibilité directe ou d'une transmission sans visibilité directe de signaux radio entre l'équipement utilisateur (20) et l'entité de station de base (111) desservante, notamment déduite par la mesure de la puissance du signal reçu et/ou par la présence de fortes composantes de propagation par trajets multiples,
- le décalage Doppler de la fréquence porteuse,
- l'angle d'arrivée du signal, notamment dans le plan vertical, et
- la distance entre l'équipement utilisateur (20) et l'entité de station de base (111) desservante.

2. Procédé selon la revendication 1, dans lequel la porteuse de radiocommunication mobile ou la plage de fréquences spécifique est utilisée par l'équipement utilisateur (20), notamment pour la transmission de données en liaison montante vers l'entité de station de base (111) desservante, et notamment par le biais d'une agrégation de porteuses, notamment une agrégation de porteuses en liaison montante mettant en jeu la porteuse de radiocommunication mobile ou la plage de fréquences spécifique, ainsi qu'une autre porteuse de radiocommunication mobile spécifique et/ou une autre plage de fréquences.

3. Procédé selon l'une des revendications précédentes, dans lequel le véhicule aérien est un véhicule aérien non habité ou un véhicule aérien habité.

4. Procédé selon l'une des revendications précédentes, dans lequel, s'agissant d'un équipement utilisateur terrestre, l'entité de station de base (111) desservante et/ou le réseau d'accès radio (110) utilise une porteuse de radiocommunication mobile ou une plage de fréquences différente de la porteuse de radiocommunication mobile ou de la plage de fréquences spécifique utilisée par l'équipement utilisateur (20).

5. Entité de station de base (111) pour le fonctionnement d'un équipement utilisateur (20) avec un réseau d'accès radio (110) d'un réseau de communication mobile (100), le réseau d'accès radio (110) comprenant au moins l'entité de station de base (111) et l'équipement utilisateur (20), se trouvant à bord d'un véhicule aérien ou correspondant à un véhicule aérien, est connecté à l'entité de station de base (111) pour la transmission de données
- en liaison descendante depuis l'entité de station de base (111) desservante vers l'équipement utilisateur (20), et
- en liaison montante depuis l'équipement utilisateur (20) vers l'entité de station de base (111) desservante,
l'entité de station de base (111), afin de garantir qu'une porteuse de radiocommunication mobile ou une plage de fréquences spécifique puisse être utilisée par l'équipement utilisateur (20), du fait que l'équipement utilisateur (20) se trouve à bord du véhicule aérien ou lui correspond, étant configurée de telle sorte que :
- une détection par l'entité de station de base (111) desservante ou par le réseau d'accès radio (110) s'opère, attestant que l'équipement utilisateur (20) se trouve à bord du véhicule aérien ou lui correspond, et
- la porteuse de radiocommunication mobile ou la plage de fréquences spécifique est utilisée par l'équipement utilisateur (20), la porteuse de radiocommunication mobile ou la plage de fréquences utilisée par l'équipement utilisateur (20) étant modifiée après la première étape de telle sorte que la porteuse de radiocommunication mobile ou la plage de fréquences spécifique soit utilisée,
**caractérisée en ce que** la détection par l'entité de station de base (111) desservante ou par le réseau d'accès radio (110), attestant que l'équipement utilisateur (20) se trouve à bord du véhicule aérien ou lui correspond, repose sur la réception ou la détection d'au moins l'un des éléments suivants :
- le nombre de cellules radio rapporté par l'équipement utilisateur (20) à l'entité de station de base (111) desservante,
- le nombre de cellules radio ou d'entités de station de base qui reçoivent la puissance du signal de radiocommunication mobile émis par l'équipement utilisateur (20),
- la présence ou non d'une transmission en visibilité directe ou d'une transmission sans visibilité directe de signaux radio entre l'équipement utilisateur (20) et l'entité de station de base (111) desservante, notamment déduite par la mesure de la puissance du signal reçu et/ou par la présence de fortes composantes de propagation par trajets multiples,
- le décalage Doppler de la fréquence porteuse,
- l'angle d'arrivée du signal, notamment dans le plan vertical, et
- la distance entre l'équipement utilisateur (20) et l'entité de station de base (111) desservante.

6. Système ou réseau de communication mobile (100) comprenant une entité de station de base (111) selon la revendication 5.

7. Programme comprenant un code de programme lisible par ordinateur qui, lorsqu'il est exécuté sur un ordinateur ou sur un équipement utilisateur (20) ou sur une entité de station de base (111) ou sur un nœud de réseau d'un réseau de communication mobile (100), ou en partie sur l'équipement utilisateur (20) et/ou en partie sur l'entité de station de base (111) et/ou en partie sur le nœud de réseau du réseau de communication mobile (100), amène l'ordinateur ou l'équipement utilisateur (20) ou l'entité de station de base (111) ou le nœud de réseau du réseau de communication mobile (100) à mettre en œuvre un procédé selon l'une des revendications 1 à 4.

8. Support lisible par ordinateur comprenant des instructions qui, lorsqu'elles sont exécutées sur un ordinateur ou sur un équipement utilisateur (20) ou sur une entité de station de base (111) ou sur un nœud de réseau d'un réseau de communication mobile (100), ou en partie sur l'équipement utilisateur (20) et/ou en partie sur l'entité de station de base (111) et/ou en partie sur le nœud de réseau du réseau de communication mobile (100), amènent l'ordinateur ou l'équipement utilisateur (20) ou l'entité de station de base (111) ou le nœud de réseau du réseau de communication mobile (100) à mettre en œuvre un procédé selon l'une des revendications 1 à 4.
